# EUROPÄISCHE PATENTANMELDUNG

(11) **EP 3 192 992 A1**
(43) Veröffentlichungstag der Anmeldung: **19.07.2017**
(21) Anmeldenummer: 17151914.3
(22) Anmeldetag: 18.01.2017
(51) Int. Cl.: F02B 37/04, F02B 39/10, F02M 26/08, F02M 26/34, F02M 26/05, F02M 26/06, F02M 26/22, F02M 26/35

(54) **BRENNKRAFTMASCHINENSYSTEM**

(30) Priorität: 18.01.2016 DE 102016200566
(71) Anmelder: Mahle International GmbH, 70376 Stuttgart (DE)
(72) Erfinder: NAGEL, Norman, 71640 Ludwigsburg (DE); NAUJOKS, Sascha, 76327 Pfinztal (DE); STRENG, Simon, 70327 Stuttgart (DE)
(74) Vertreter: BRP Renaud & Partner mbB Rechtsanwälte Patentanwälte Steuerberater

(57) **Zusammenfassung**

Die vorliegende Erfindung betrifft ein Brennkraftmaschinensystem (1), insbesondere für ein Kraftfahrzeug (2), das eine Brennkraftmaschine (3), eine Frischluftanlage (4) zum Versorgen der Brennkraftmaschine (3) mit Frischluft, eine Abgasanlage (5) zum Abführen von in der Brennkraftmaschine (3) entstehendem Abgas von der Brennkraftmaschine (3) sowie einen Abgasrückführkanal (13) zur fluidischen Verbindung der Abgasanlage (5) mit der Frischluftanlage (4) aufweist. Eine erhöhte Effizienz und/oder ein vereinfachter Aufbau des Brennkraftmaschinensystems (1) wird dadurch erreicht, dass ein Zusatzkanal (16) vorgesehen wird, der vom Abgasrückführkanal (13) abzweigt und stromab des Abgasrückführkanals (13) in die Frischluftanlage (4) mündet, wobei im Zusatzkanal (16) eine Fördereinrichtung (18) zum Fördern von durch den Zusatzkanal (16) strömendem Fluid vorgesehen ist und wobei das Brennkraftmaschinensystem (1) eine Ventileinrichtung (22) zum wahlweisen Verbinden des Zusatzkanals (16) mit der Abgasanlage (5) und der Frischluftanlage (4) über den Abgasrückführkanal (13) aufweist.

## Beschreibung

Die vorliegende Erfindung betrifft ein Brennkraftmaschinensystem mit einem Abgasrückführkanal zum fluidischen Verbinden einer Abgasanlage mit einer Frischluftanlage des Brennkraftmaschinensystems, gemäß dem Oberbegriff des Anspruchs 1.

Ein Ziel bei der Entwicklung von Brennkraftmaschinensystemen ist die Verbesserung der Umweltfreundlichkeit. Zur Schadstoffemissionsreduzierung und/oder zur Verringerung des Kraftstoffverbrauchs einer Brennkraftmaschine solcher Systeme ist es bekannt, der Brennkraftmaschine Abgas rückzuführen. Hierzu kommt in der Regel ein Abgasrückführkanal zum Einsatz, der eine Abgasanlage zum Abführen von in der Brennkraftmaschine entstehendem Abgas fluidisch mit einer Frischluftanlage zum Versorgen der Brennkraftmaschine mit Frischluft verbindet. Zur Erhöhung des Massenstroms der Abgasrückführung ist es prinzipiell vorstellbar, eine Fördereinrichtung vorzusehen, die das durch den Abgasrückführkanal strömende Abgas fördert bzw. antreibt.

Ein weiteres Ziel bei der Entwicklung von Brennkraftmaschinensystemen ist die Leistungssteigerung solcher Brennkraftmaschinen. Hierzu wird üblicherweise der Druck in der der Brennkraftmaschine zuzuführenden Frischluft erhöht. Dabei kommen in der Regel Ladeeinrichtungen, insbesondere Abgasturbolader, zum Einsatz.

Die vorliegende Erfindung beschäftigt sich mit dem Problem, für ein Brennkraftmaschinensystem mit einer Brennkraftmaschine und einem Abgasrückführkanal eine verbesserte oder zumindest andere Ausführungsform anzugeben, die sich insbesondere durch eine erhöhte Effizienz und/oder einen vereinfachten Aufbau auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Abgasrückführkanal zum Rückführen von Abgas zu einer Brennkraftmaschine sowohl zur Abgasrückführung als auch zur Zuführung von Frischluft zur Brennkraftmaschine zu nutzen und eine Fördereinrichtung vorzusehen, die wahlweise sowohl das Abgas zur Abgasrückführung als auch die Frischluft zur Frischluftversorgung der Brennkraftmaschine durch den Abgasrückführkanal fördert. Durch eine derartige Ausgestaltung des Brennkraftmaschinensystems ist es also insbesondere möglich, die Fördereinrichtung einerseits zum Fördern von Abgas zwecks Abgasrückführung und andererseits zwecks Aufladen der Frischluft einzusetzen. Dementsprechend können separate Fördereinrichtungen, welche jeweils zur Förderung von Abgas oder zum Aufladen von Frischluft vorgesehen sind, entfallen. Hierdurch ergibt sich eine erhöhte Effizienz des Brennkraftmaschinensystems. Darüber hinaus führt der Entfall von zusätzlichen Fördereinrichtungen zu einem vereinfachten Aufbau sowie zu reduziertem Gewicht und reduzierten Kosten des Brennkraftmaschinensystems.

Dem Erfindungsgedanken entsprechend umfasst das Brennkraftmaschinensystem eine Brennkraftmaschine, in der durch Verbrennung Abgas entsteht. Zum Versorgen der Brennkraftmaschine mit Frischluft ist eine Frischluftanlage vorgesehen, wobei die Frischluft in der Brennkraftmaschine zusammen mit einem Kraftstoff verbrannt wird. Das hierdurch entstehende Abgas wird mittels einer Abgasanlage des Brennkraftmaschinensystems von der Brennkraftmaschine abgeführt. Der Abgasrückführkanal verbindet außerhalb der Brennkraftmaschine, also extern, die Abgasanlage fluidisch mit der Frischluftanlage. Hierzu erstreckt sich der Abgasrückführkanal von einer Abgaszweigstelle der Abgasanlage bis zu einer Frischluftzweigstelle der Frischluftanlage. Erfindungsgemäß ist ein Zusatzkanal vorgesehen, der vom Abgasrückführkanal abzweigt und an einer stromab der Frischluftzweigstelle angeordneten Einlassstelle der Frischluftanlage in die Frischluftanlage mündet. Über den Abgasrückführkanal ist der Zusatzkanal also einerseits mit der Abgasanlage und andererseits mit der Frischluftanlage fluidisch verbunden. Die Fördereinrichtung ist im Zusatzkanal angeordnet und dient dem Antreiben von durch den Zusatzkanal strömendem Fluid, das Abgas und/oder Frischluft sein kann. Eine Ventileinrichtung sorgt dafür, dass der Zusatzkanal wahlweise mit der Abgasanlage oder der Frischluftanlage fluidisch verbunden werden kann. Mittels der Ventileinrichtung ist es also möglich, Abgas oder Frischluft durch den Zusatzkanal strömen zu lassen. Vorstellbar ist es auch, die Ventileinrichtung derart zu betätigen, dass sowohl Abgas als auch Frischluft durch den Zusatzkanal strömt und über die Einlassstelle zur Brennkraftmaschine gelangt. Die Fördereinrichtung ermöglicht es ferner, das durch den Zusatzkanal strömende Fluid zu fördern, insbesondere den Druck in diesem Fluid zu erhöhen. Eine entsprechende Steuerung der Fördereinrichtung und der Ventileinrichtung erlaubt es also, den Zusatzkanal über den Abgasrückführkanal wahlweise zur Abgasrückführung zu verwenden und das Abgas zusätzlich mittels der Fördereinrichtung zu fördern, insbesondere den Druck im durch den Zusatzkanal strömenden Abgas zu erhöhen oder den Zusatzkanal über den Abgasrückführkanal mit der Frischluftanlage fluidisch zu verbinden und somit durch den Zusatzkanal Frischluft zur Brennkraftmaschine zu führen und zusätzlich durch die Fördereinrichtung den Druck in der durch den Zusatzkanal strömenden Frischluft zu erhöhen. Mit anderen Worten, die Fördereinrichtung kann sowohl zur Aufladung von Frischluft als auch zur Förderung von Abgas zwecks Abgasrückführung, insbesondere zur Erhöhung der Massenströme der entsprechenden Fluide, eingesetzt werden.

Die Ventileinrichtung kann prinzipiell beliebig ausgestaltet sein. Die Ventileinrichtung weist vorzugsweise zumindest zwei Ventile auf, welche jeweils eine fluidische Verbindung zwischen der Abgasanlage und dem Zusatzkanal bzw. eine fluidische Verbindung zwischen dem Zusatzkanal und der Frischluftanlage, insbesondere stromauf der Einlassstelle, herstellen bzw. trennen können.

Die Fördereinrichtung kann prinzipiell beliebig ausgestaltet sein, sofern sie das Fördern des entsprechenden Fluids durch den Zusatzkanal gewährleistet. Bei bevorzugten Ausführungsformen ist die Fördereinrichtung als eine elektrisch angetriebene Maschine ausgestaltet. Dies erlaubt es, die Fördereinrichtung unabhängig vom Betriebszustand der Brennkraftmaschine zu betreiben und/oder gewährleistet rasche Reaktionszeiten der Fördereinrichtung und/oder ein breites Spektrum an möglichen Förderleistungen der Fördereinrichtung, die an die jeweiligen Anforderungen während des Betriebs des Brennkraftmaschinensystems angepasst werden können.

Bevorzugte Ausführungsformen des Brennkraftmaschinensystems sehen einen Abgasturbolader vor, der eine Turbine und einen Verdichter aufweist, wobei die Turbine in der Abgasanlage und der Verdichter in der Frischluftanlage angeordnet sind. Die Turbine treibt hierbei den Verdichter an, der hierdurch die der Brennkraftmaschine zuzuführende Frischluft verdichtet. Hierdurch wird eine Leistungssteigerung der Brennkraftmaschine erzielt. Vorstellbar ist es hierbei insbesondere, sowohl die Fördereinrichtung als auch den Abgasturbolader zum Fördern bzw. Verdichten der Frischluft einzusetzen. Insbesondere ist es vorstellbar, die Fördereinrichtung bei Bedarf zumindest zeitweise zum Verdichten der Luft einzusetzen.

Zur Abgasbehandlung des in der Brennkraftmaschine entstehenden Abgases, insbesondere zur Reduzierung von Schadstoffemissionen, weist das Brennkraftmaschinensystem vorteilhaft eine Abgasbehandlungsanlage auf. Die Abgasbehandlungsanlage umfasst zumindest eine Abgasnachbehandlungseinrichtung, beispielsweise einen Katalysator und dergleichen, wobei wenigstens eine dieser Abgasnachbehandlungseinrichtungen stromauf der Turbine in der Abgasanlage angeordnet ist. Die Anordnung der Abgasnachbehandlungseinrichtung stromauf der Turbine führt dazu, dass die Abgasnachbehandlungseinrichtung von Abgas mit erhöhter Temperatur durchströmt wird. Hierdurch wird eine zur Funktion der Abgasnachbehandlungseinrichtung erforderliche Temperatur der Abgasnachbehandlungseinrichtung schneller erreicht. Dementsprechend kann das Abgas, insbesondere nach einem Betriebsstart des Brennkraftmaschinensystems, schon nach einer kürzeren Zeit effektiv behandelt werden. Somit entfallen auch Aufheizmaßnahmen, die zum Erreichen der zur Funktion der Abgasnachbehandlungseinrichtung erforderlichen Temperatur erforderlich wären oder werden zumindest reduziert. Es wird also die Umweltbilanz des Systems verbessert und/oder der Kraftstoffverbrauch sowie Schadstoffemissionen werden verringert.

Eine solche Anordnung der Abgasnachbehandlungseinrichtung stromauf der Turbine kann dazu führen, dass der Druck im Abgas stromab der Abgasnachbehandlungseinrichtung abnimmt. Dementsprechend kann die Leistung des Abgasturboladers reduziert sein. In diesen Fällen kann die Fördereinrichtung zusätzlich zum Abgasturbolader zum Verdichten der Ladeluft eingesetzt werden, insbesondere um diese Verringerung der Leistung des Abgasturboladers auszugleichen.

Prinzipiell kann die Abgaszweigstelle des Abgasrückführkanals stromauf oder stromab der Turbine in der Abgasanlage angeordnet sein. Prinzipiell ist es zudem vorstellbar, die Abgaszweigstelle zwischen der Turbine und der Abgasnachbehandlungseinrichtung oder stromauf der Abgasnachbehandlungseinrichtung in der Abgasanlage anzuordnen.

Vorstellbar ist es zudem, die Frischluftzweigstelle stromauf des Verdichters oder stromab des Verdichters in der Frischluftanlage anzuordnen.

Ist die Frischluftzweigstelle stromab des Verdichters in der Frischluftanlage angeordnet, so ist die Abgaszweigstelle bevorzugt stromauf der Turbine in der Abgasanlage angeordnet. Somit wird eine so genannte Hochdruckabgasrückführung realisiert, bei dem das Abgas bei der Abgasrückführung der bereits verdichteten Frischluft beigemischt wird.

Ist die Frischluftzweigstelle stromauf des Verdichters in der Frischluftanlage angeordnet, so ist die Abgaszweigstelle vorteilhaft stromab der Turbine in der Abgasanlage angeordnet. Somit wird bei der Abgasrückführung über den Abgasrückführkanal eine so genannte Niederdruckabgasrückführung realisiert, bei der das Abgas der Frischluft vor dem Verdichten des der Frischluft durch den Verdichter des Abgasturboladers beigemischt wird.

Bei sämtlichen Arten der Abgasrückführung über den Abgasrückführkanal und den Zusatzkanal ist es mittels der Fördereinrichtung möglich, den Massenstrom des Abgases zur Abgasrückführung zu erhöhen und/oder zu Variieren. Hierdurch ist es insbesondere möglich, Schadstoffemissionen durch die Brennkraftmaschine zu reduzieren und/oder den Kraftstoffverbrauch der Brennkraftmaschine zu senken.

Bei bevorzugten Ausführungsformen weist das Brennkraftmaschinensystem einen Kühler auf, der stromab der Einlassstelle in der Frischluftanlage angeordnet ist. Dieser Kühler, der nachfolgend als Frischluftkühler bezeichnet wird, dient dem Kühlen von durch die Frischluftanlage strömenden Fluid. Durch die Anordnung des Frischluftkühlers stromab der Einlassstelle in der Frischluftanlage kühlt der Frischluftkühler dabei sowohl das durch den Zusatzkanal strömende Fluid als auch das durch die Frischluftanlage strömende Fluid. Der Frischluftkühler ist also insbesondere ein Ladeluftkühler. Das heißt, dass der Frischluftkühler beim fluidischen Verbinden des Zusatzkanals mit der Abgasanlage sowohl die Frischluft als auch das der Frischluft beigemischte Abgas kühlt. Ist der Zusatzkanal über den Abgasrückführkanal fluidisch mit der Frischluftanlage verbunden, kann mit dem Frischluftkühler sowohl die durch den Zusatzkanal strömende Frischluft, und insbesondere die durch die Fördereinrichtung verdichtete Frischluft, als auch die durch den Verdichter verdichtete Frischluft gekühlt werden. Somit können insbesondere separatere Kühler für den Verdichter und den Zusatzkanal, insbesondere der Abgasrückführung über den Zusatzkanal, entfallen.

Selbstverständlich ist es auch möglich, in der Frischluftanlage einen stromauf der Einlassstelle und stromab des Verdichters angeordneten zusätzlichen Kühler vorzusehen.

Ebenso ist es vorstellbar, im Zusatzkanal stromab der Fördereinrichtung und stromauf der Einlassstelle einen Kühler zum Kühlen des durch den Zusatzkanal strömenden Fluids vorzusehen. Der im Zusatzkanal angeordnete Kühler wird nachfolgend als Zusatzkühler bezeichnet.

Auch ist es vorstellbar, im Abgasrückführkanal einen Abgaskühler zum Kühlen von durch den Abgasrückführkanal strömendem Abgas vorzusehen. Ein solcher Abgaskühler kann auch in der Abgasanlage vorgesehen sein, insbesondere wenn die Abgaszweigstelle stromab der Abgasnachbehandlungseinrichtung angeordnet ist.

Mittels der Ventileinrichtung und der Fördereinrichtung kann die fluidische Verbindung des Zusatzkanals mit der Abgasanlage und der Frischluftanlage sowie die Förderung des durch den Zusatzkanal strömenden Fluids beliebig gesteuert werden. Eine solche Steuerung erfolgt bspw. durch eine Steuereinrichtung, die entsprechend ausgestaltet ist.

In einem Normalmodus, bei dem keine Abgasrückführung und keine Frischluftzuführung über den Abgasrückführkanal und den Zusatzkanal erfolgt, sperrt die Steuereinrichtung die fluidische Verbindung zwischen der Frischluftanlage und der Abgasanlage über den Abgasrückführkanal. Zudem wird die Fördereinrichtung nicht betrieben bzw. außer Betrieb gesetzt.

In einem Frischluftmodus wird eine über den Abgasrückführkanal verlaufende fluidische Abgasverbindung des Zusatzkanals mit der Abgasanlage unterbrochen bzw. gesperrt, während eine über den Zusatzkanal verlaufende fluidische Frischluftverbindung zwischen der Frischluftanlage und der Einlassstelle freigegeben wird. Das heißt, dass über den Abgasrückführkanal und den Zusatzkanal Frischluft zur Einlassstelle strömt.

Im Frischluftmodus wird bevorzugt zudem die Fördereinrichtung betrieben, um die durch den Zusatzkanal strömende Frischluft zu fördern und insbesondere zu verdichten. Im Frischluftmodus wird also insbesondere der Ladeluftdruck der Frischluft mittels der Fördereinrichtung erhöht. Der Frischluftmodus kann dabei zusätzlich zum Betrieb des Abgasturboladers zum Verdichten der Ladeluft durchgeführt werden.

Bei bevorzugten Ausführungsformen wird das Brennkraftmaschinensystem im Frischluftmodus betrieben, wenn die Brennkraftmaschine in einem transienten Zustand ist. Ein transienter Zustand der Brennkraftmaschine zeichnet sich insbesondere durch eine zunehmende Drehzahl und/oder eine zunehmende Last der Brennkraftmaschine aus. Ein transienter Zustand liegt also zwischen zwei stationären Zuständen der Brennkraftmaschine, in denen sich der Leistungsbedarf an die Brennkraftmaschine bzw. die Leistungsanforderung an die Brennkraftmaschine auf einen im wesentlichen konstanten Wert eingestellt hat. Der transiente Zustand ist somit der Übergang zwischen zwei solchen stationären Zuständen. In einem solchen transienten Zustand ist die Leistungsanforderung an die Brennkraftmaschine hoch. Bei solchen hohen Leistungsanforderungen ist eine rasche Verdichtung bzw. Aufladung der Frischluft erforderlich, die mittels des Abgasturboladers nicht oder unzureichend erreicht werden kann. Dementsprechend führt das Ausführen des Frischluftmodus in einem solchen transienten Zustand der Brennkraftmaschine zu einem verbesserten Aufladen bzw. Verdichten der Frischluft und somit zu einer schnelleren Reaktion der Brennkraftmaschine auf die geforderte Leistungsänderung. Somit wird also insbesondere ein transientes Verhalten des Brennkraftmaschinensystems, insbesondere der Brennkraftmaschine, verbessert.

Bei vorteilhaften Ausführungsformen weist die Ventileinrichtung ein stromab der Frischluftzweigstelle und stromauf der Einlassstelle in der Frischluftanlage angeordnetes Ventil auf. Durch dieses Ventil ist es möglich, die Frischluftanlage zwischen der Frischluftzweigstelle und der Einlassstelle zu sperren und/oder den Strömungsquerschnitt in diesem Bereich zu variieren. Dies erlaubt es insbesondere, den Anteil der durch den Zusatzkanal strömenden Frischluft an der Gesamtmenge der der Brennkraftmaschine zugeführten Frischluft zu variieren. Insbesondere ist es hierdurch möglich, die gesamte der Brennkraftmaschine zugeführte Frischluft über dem Zusatzkanal zu führen. Somit wird insbesondere der Strömungsweg der Frischluft reduziert und somit das Aufladen der Frischluft mittels der Fördereinrichtung verbessert und/oder beschleunigt. Ist der Verdichter stromauf der Frischluftzweigstelle in der Frischluftanlage angeordnet, so wird die gesamte verdichtete Luft, das heißt die durch den Verdichter und durch die Fördereinrichtung verdichtete Luft, über den verkürzten Weg über den Zusatzkanal zur Brennkraftmaschine geführt, so dass hierdurch ebenfalls ein effizienteres Aufladen und/oder schnellere Reaktionszeiten der Brennkraftmaschine, insbesondere in transientem Zustand, erzielt wird.

In einem Abgasrückführmodus des Brennkraftmaschinensystems wird mittels der Ventileinrichtung eine über den Abgasrückführkanal verlaufende fluidische Frischluftverbindung des Zusatzkanals mit der Frischluftanlage gesperrt und eine über dem Zusatzkanal verlaufende fluidische Abgasverbindung zwischen der Abgasanlage und der Einlassstelle freigegeben. Im Abgasrückführmodus strömt also Abgas über den Abgasrückführkanal und den Zusatzkanal zur Brennkraftmaschine und wird der Brennkraftmaschine also rückgeführt.

Bevorzugt ist es hierbei, wenn im Abgasrückführmodus die Fördereinrichtung zum Fördern von Abgas durch den Zusatzkanal betrieben wird. Das heißt, dass im Abgasrückführmodus die Fördereinrichtung betrieben werden kann, um den Massenstrom des Abgases durch den Zusatzkanal und somit den Massenstrom der Abgasrückführung zu erhöhen. Auch kann hierdurch die Druckdifferenz im Zusatzkanal erhöht werden. Durch diese Maßnahmen lässt sich insbesondere die der Brennkraftmaschine rückgeführte Abgasmenge und/oder der Abgasanteil in großen Bereichen, insbesondere bei unterschiedlichen Betriebszuständen der Brennkraftmaschine, unabhängig, steuern und variieren.

Zur entsprechenden Betätigung der Ventileinrichtung und/oder der Fördereinrichtung kommt, wie vorstehend erwähnt, eine Steuereinrichtung zum Einsatz. Vorstellbar ist es hierbei auch, mehrere solche Steuereinrichtungen vorzusehen, welche jeweils in den unterschiedlichen Betriebsmodi und/oder zum Steuern der Ventileinrichtung bzw. der Fördereinrichtung zum Einsatz kommen.

Selbstverständlich ist es auch möglich, in einem Zwischenmodus den Zusatzkanal über den Abgasrückführkanal fluidisch sowohl mit der Abgasanlage als auch mit der Frischluftanlage zu verbinden, so dass durch den Zusatzkanal eine Mischung aus Abgas und Frischluft strömt.

Das Brennkraftmaschinensystem kommt bevorzugt in einem Kraftfahrzeug zum Einsatz, wobei es vorstellbar ist, das Brennkraftmaschinensystem auch in anderen Anwendungen einzusetzen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1 bis 6: jeweils eine stark vereinfachte, schaltplanartige Darstellung eines Kraftfahrzeugs mit einem Brennkraftmaschinensystem bei jeweils unterschiedlichem Ausführungsbeispiel des Brennkraftmaschinensystems,
- Fig. 7: die Ansicht aus Fig. 1 bei einem ersten Betriebsmodus des Brennkraftmaschinensystems,
- Fig. 8: die Ansicht aus Fig. 1 bei einem zweiten Betriebsmodus des Brennkraftmaschinensystems.

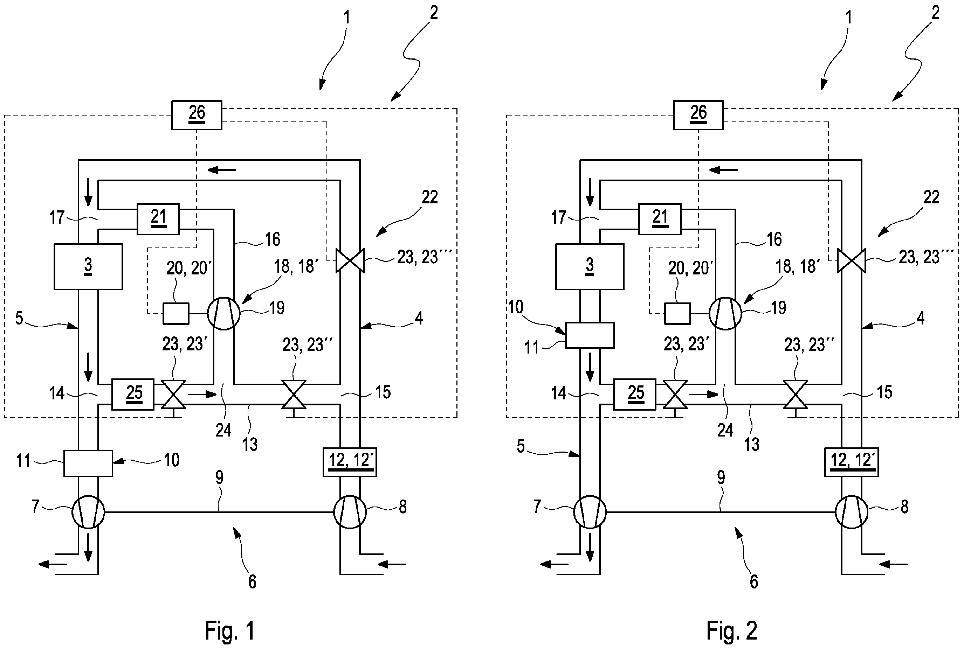

Fig. 1 zeigt ein Brennkraftmaschinensystem 1, das in einem Kraftfahrzeug 2 eingesetzt wird, bspw. um das Kraftfahrzeug 2 anzutreiben. Das Brennkraftmaschinensystem 1 umfasst eine Brennkraftmaschine 3 in der eine Mischung aus Frischluft und Kraftstoff verbrannt wird. Hierzu wird die Brennkraftmaschine 3 mit Hilfe einer Frischluftanlage 4 mit Frischluft versorgt. Das in der Brennkraftmaschine 3 durch die Verbrennung entstehende Abgas wird mit Hilfe einer Abgasanlage 5 von der Brennkraftmaschine 3 abgeführt. Ein Abgasturbolader 6 weist eine Turbine 7 und einen Verdichter 8 auf, wobei die Turbine 7 in der Abgasanlage 5 und der Verdichter 8 in der Frischluftanlage 4 angeordnet ist. Die Turbine 7 und der Verdichter 8 sind, bspw. über eine Welle 9, miteinander antriebsverbunden, so dass die durch das Abgas angetriebene Turbine 7 den Verdichter 8 antreibt. Der Verdichter 8 verdichtet somit die der Brennkraftmaschine 3 zuzuführende Frischluft bzw. lädt die Frischluft auf. Mittels des Abgasturboladers 6 wird also Ladeluft für die Brennkraftmaschine 3 zur Verfügung gestellt. Das Brennkraftmaschinensystem 1 weist zudem eine Abgasbehandlungsanlage 10 auf, die eine Abgasnachbehandlungseinrichtung 11 umfasst. Die Abgasnachbehandlungseinrichtung 11 dient dem Reinigen, insbesondere dem Befreien des Abgases, von Schadstoffen. Die Abgasnachbehandlungseinrichtung 11 ist stromauf der Turbine 7 in der Abgasanlage 5 angeordnet. In der Frischluftanlage 4 ist stromab des Verdichters 8 ein Kühler 12 angeordnet, der nachfolgend als Frischluftkühler 12 bezeichnet wird. Der Frischluftkühler 12 kühlt hierbei die Frischluft stromab des Verdichters 8 und somit insbesondere die Ladeluft. Der Frischluftkühler 12 ist also insbesondere als ein Ladeluftkühler 12' ausgebildet. Ein Abgasrückführkanal 13 verläuft von einer Abgaszweigstelle 14 der Abgasanlage 5 bis zu einer Frischluftzweigstelle 15 der Frischluftanlage 4. Die Abgaszweigstelle 14 ist stromauf der Turbine 7 und der Abgasnachbehandlungseinrichtung 11 angeordnet, während die Frischluftzweigstelle 15 stromab des Verdichters 8 und des Frischluftkühlers 12 angeordnet ist. Der Abgasrückführkanal 13 stellt somit eine fluidische Verbindung zwischen der Frischluftanlage 4 und der Abgasanlage 5 dar.

Ein Zusatzkanal 16 zweigt von dem Abgasrückführkanal 13 an einer Zusatzzweigstelle 24 ab und mündet an einer Einlassstelle 17 der Frischluftanlage 4 in die Frischluftanlage 4. Der Zusatzkanal 16 ist also über den Abgasrückführkanal 13 fluidisch mit der Abgasanlage 5 und der Frischluftanlage 4 verbunden. Im Zusatzkanal 16 ist eine Fördereinrichtung 18 zum Fördern bzw. Antreiben von durch den Zusatzkanal 16 strömendem Fluid vorgesehen. Die Fördereinrichtung 18 weist eine Fördereinheit 19 und eine Antriebseinheit 20 auf. Die Antriebseinheit 20 ist im gezeigten Beispiel als eine elektrische Antriebseinheit 20', bspw. als ein Elektromotor 20', ausgebildet, so dass die Fördereinrichtung 18 als eine elektrisch angetriebene Maschine 18' ausgestaltet ist. Stromab der Fördereinrichtung 18 und stromauf der Einlassstelle 17 ist im Zusatzkanal 16 ein Zusatzkühler 21 zum Kühlen des durch den Zusatzkanal 16 strömenden Fluids vorgesehen. Das Brennkraftmaschinensystem 1 umfasst ferner eine Ventileinrichtung 22, die mehrere Ventile 23 umfasst, wobei die Ventileinrichtung 22 im gezeigten Beispiel drei solche Ventile 23 aufweist. Ein erstes Ventil 23' ist im Abgasrückführkanal 13 zwischen der Abgaszweigstelle 14 und der Zusatzzweigstelle 24 angeordnet. Ein zweites Ventil 23" ist im Abgasrückführkanal 13 zwischen der Frischluftzweigstelle 15 und der Zusatzzweigstelle 24 angeordnet. Ein dritten Ventil 23'" ist in der Frischluftanlage 4 zwischen der Frischluftzweigstelle 15 und der Einlassstelle 17 angeordnet. Beim gezeigten Beispiel ist ferner ein Abgaskühler 25 vorgesehen, der im Abgasrückführkanal 13 zwischen der Abgaszweigstelle 14 und dem ersten Ventil 23' bzw. der Zusatzzweigstelle 24 angeordnet ist. Der Abgaskühler 25 dient dem Kühlen von durch den Abgasrückführkanal 13 strömendem Abgas.

Durch eine entsprechende Steuerung der Ventileinrichtung 22, bspw. durch eine Steuereinrichtung 26 können die entsprechenden Ventile 23 in beliebigen Stufen oder stufenlos zwischen einem geschlossenen und einem geöffnete Zustand verstellt werden. Dies ermöglicht es, den Zusatzkanal 16 über den Abgasrückführkanal 13 zur Abgasrückführung oder zur Versorgung der Brennkraftmaschine 3 mit Frischluft sowie zu einer Mischung aus Abgasrückführung und Frischluftversorgung einzusetzen. Durch eine entsprechende Steuerung der Fördereinrichtung 18, bspw. über die Steuereinrichtung 26, ist es ferner möglich, dass durch den Zusatzkanal 16 strömende Fluid, das heißt insbesondere Abgas oder Frischluft, anzutreiben bzw. zu fördern. Insbesondere ist es somit möglich, zur Abgasrückführung durch den Zusatzkanal 16 strömendes Abgas zu fördern, insbesondere den Massenstrom des Abgases zu erhöhen. Ferner ist es möglich, mittels der Fördereinrichtung 18 den Druck in der durch den Zusatzkanal 16 strömenden Frischluft zu erhöhen und die Frischluft somit zu verdichten bzw. aufzuladen. Der Zusatzkanal 16 erfüllt somit zusammen mit dem Abgasrückführkanal 13 eine Doppelfunktion, nämlich die der Abgasrückführung und die der Zuführung von Frischluft zur Brennkraftmaschine, wobei durch die Fördereinrichtung 18 zusätzlich eine Förderung von Abgas bzw. das Erzeugen von Ladeluft und/oder das Erhöhen des Ladeluftdrucks erfolgen kann.

Fig. 2 zeigt ein anderes Ausführungsbeispiel des Brennkraftmaschinensystems 1, das sich von dem in Fig. 1 gezeigten Ausführungsbeispiel dadurch unterscheidet, dass die Abgasnachbehandlungseinrichtung 11 stromauf der Turbine 7 und stromauf der Abgaszweigstelle 14 angeordnet ist. In diesem Ausführungsbeispiel wird das Abgas also bevor es zur Turbine 7 gelangt und bevor es zur Abgasrückführung durch den Abgasrückführkanal 13 und den Zusatzkanal 16 geführt wird, mit Hilfe der Abgasnachbehandlungseinrichtung 11 nachbehandelt.

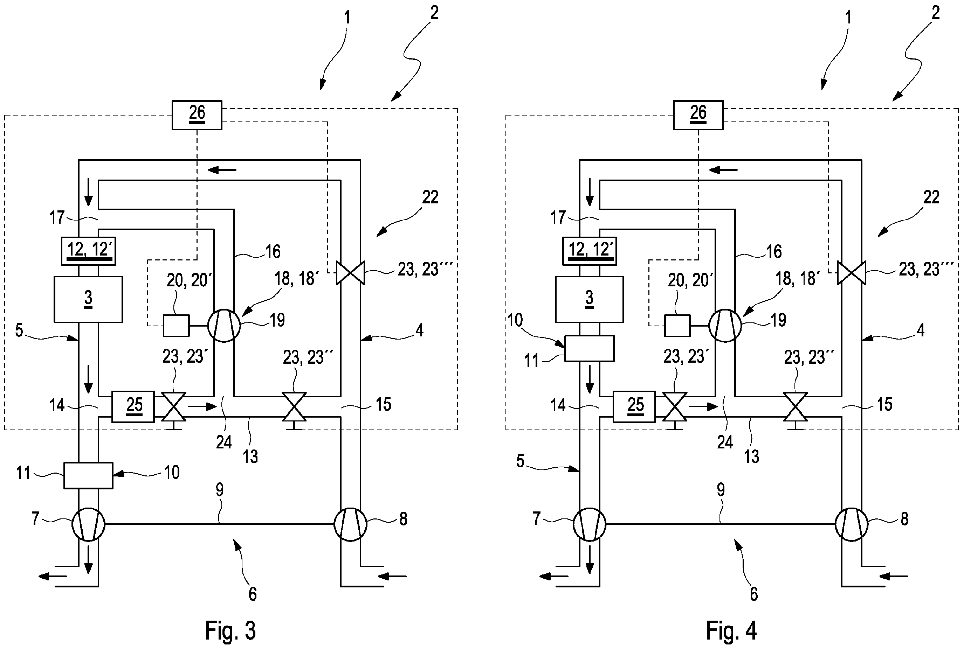

Ein weiteres Ausführungsbeispiel des Brennkraftmaschinensystems 1 ist in Fig. 3 gezeigt. Dieses Ausführungsbeispiel unterscheidet sich von dem in Fig. 1 gezeigten Ausführungsbeispiel dadurch, dass der Frischluftkühler 12 bzw. der Ladeluftkühler 12' stromab der Einlassstelle 17 in der Frischluftanlage 4 angeordnet ist. Das heißt, dass der Frischluftkühler 12 sowohl die von dem Verdichter 8 verdichtete Frischluft als auch das durch den Zusatzkanal 16 strömende Fluid kühlen kann. Dabei ist in diesem Ausführungsbeispiel im Zusatzkanal 16 kein Zusatzkühler 21 vorgesehen.

Das in Fig. 4 dargestellte Ausführungsbeispiel unterscheidet sich von dem in Fig. 3 gezeigten Ausführungsbeispiel dadurch, dass die Abgasnachbehandlungseinrichtung 11 stromauf der Einlassstelle 14 und stromauf der Turbine 7 in der Abgasanlage 5 angeordnet ist. Insofern entspricht das in Fig. 4 gezeigte Ausführungsbeispiel dem in Fig. 2 gezeigten Ausführungsbeispiel mit dem Unterschied, dass der Frischluftkühler 12 stromab der Einlassstelle 17 angeordnet ist und dass kein Zusatzkühler 21 vorgesehen ist.

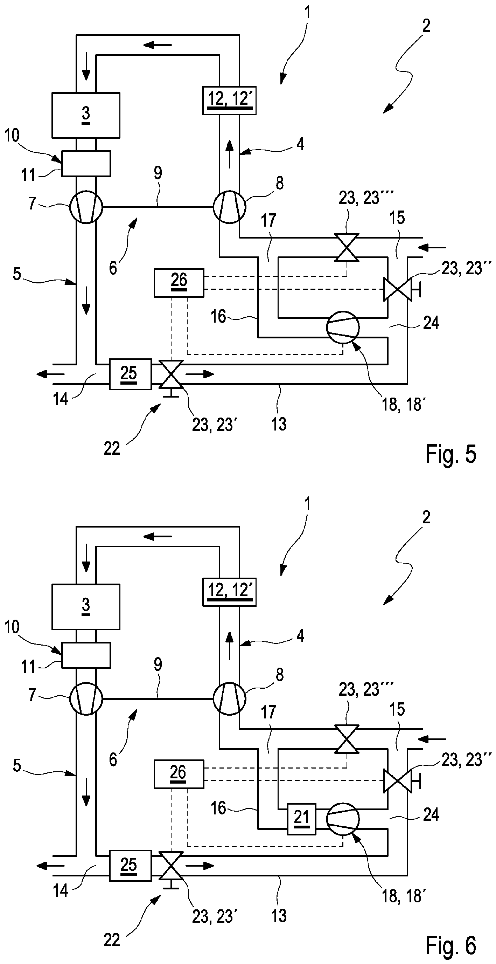

In Fig. 5 ist ein weiteres Ausführungsbeispiel des Brennkraftmaschinensystems 1 gezeigt. Dieses Ausführungsbeispiel unterscheidet sich von dem in Fig. 4 gezeigten Ausführungsbeispiel dadurch, dass die Abgaszweigstelle 14 der Abgasanlage 5 stromab der Turbine 7 und stromab der Abgasnachbehandlungseinrichtung 11 angeordnet ist. Zudem ist die Frischluftzweigstelle 15 der Frischluftanlage 4 stromauf des Verdichters 8 angeordnet. Darüber hinaus ist die Einlassstelle 17 stromab der Frischluftzweigstelle 15 und stromauf des Verdichters 8 angeordnet. Bei dem in den Fig. 1 bis 4 gezeigten Ausführungsbeispielen erfolgt eine Abgasrückführung also durch Beimischung von Abgas zur bereits durch den Verdichter 8 verdichteten Luft. Es erfolgt also eine so genannte Hochdruckabgasrückführung. Bei dem in Fig. 6 gezeigten Ausführungsbeispiel erfolgt die Abgasrückführung durch Beimischung zur Frischluft stromauf der Turbine 8 und somit zur Frischluft, bevor sie verdichtet wird. Es erfolgt also eine so genannte Niederdruckabgasrückführung.

Ein weiteres Ausführungsbeispiel des Brennkraftmaschinensystems 1 ist in Fig. 6 gezeigt und unterscheidet sich von dem in Fig. 5 gezeigten Ausführungsbeispiel dadurch, dass im Zusatzkanal 16 der Zusatzkühler 21 vorgesehen ist.

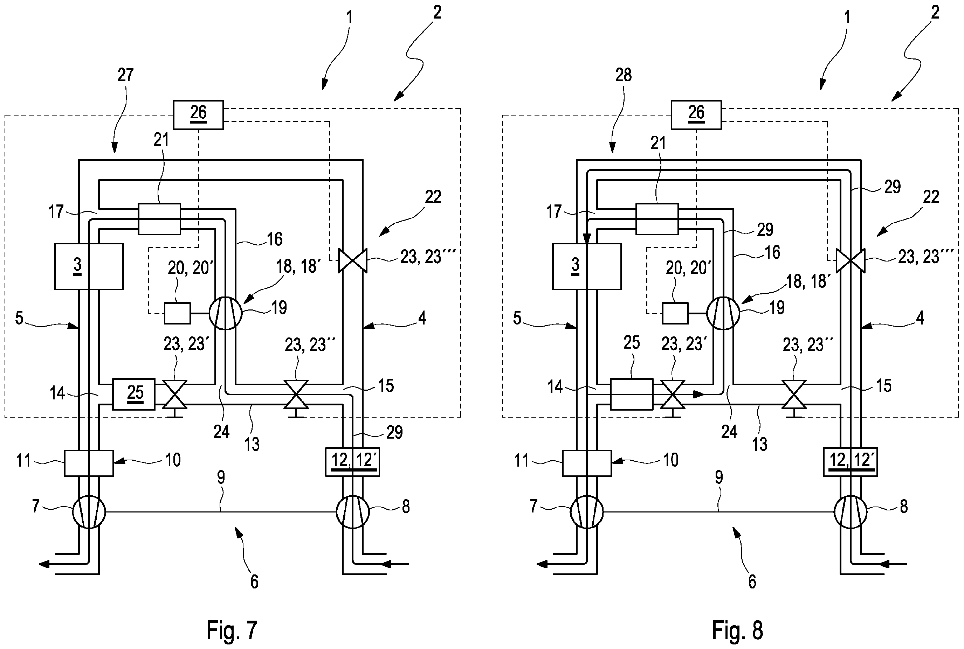

Anhand des in Fig. 1 gezeigten Ausführungsbeispiels des Brennkraftmaschinensystems 1 werden in den Fig. 7 und 8 zwei unterschiedliche Betriebsmodi des Brennkraftmaschinensystems 1 dargestellt und erläutert.

In Fig. 7 wird das Brennkraftmaschinensystem 1 in einem Frischluftmodus 27 betrieben. Im Frischluftmodus 27 werden das erste Ventil 23' und das dritte Ventil 23'" der Ventileinrichtung 22 geschlossen, während das zweite Ventil 23" der Ventileinrichtung 22 geöffnet wird. Hierdurch wird also eine über den Abgasrückführkanal 13 verlaufende fluidische Abgasverbindung des Zusatzkanals 16 mit der Abgasanlage 5 gesperrt und eine über den Zusatzkanal 16 verlaufende fluidische Frischluftverbindung zwischen der Frischluftanlage 4 und der Einlassstelle 17 freigegeben. Durch das Sperren des stromab der Frischluftzweigstelle 15 angeordneten dritten Ventils 23'" kann die Frischluft lediglich über die Frischluftzweigstelle 15 und den Zusatzkanal 16 sowie der Einlassstelle 17 zur Brennkraftmaschine 3 gelangen. Dabei wird im gezeigten Frischluftmodus 27 die Fördereinrichtung 18 betrieben, um die durch den Zusatzkanal 16 strömende Frischluft zu fördern und insbesondere zu verdichten und somit der Brennkraftmaschine 3 Ladeluft zur Verfügung zu stellen. Diese Verdichtung der Ladeluft erfolgt dabei zusätzlich zur durch den Verdichter 8 erfolgten Verdichtung. Der Strömungsweg von Frischluft und Abgas ist dabei mittels einer durchgezogenen Linie 29 angedeutet. Die Steuerung der Ventileinrichtung 22 bzw. der Ventile 23 sowie der Fördereinrichtung 18 erfolgt dabei mit Hilfe der Steuereinrichtung 26.

Das Brennkraftmaschinensystem 1 wird bevorzugt im Frischluftmodus 27 betrieben, wenn die Brennkraftmaschine 3 in einem transienten Zustand ist, bei dem eine Drehzahl und/oder eine Last der Brennkraftmaschine 3 zunimmt/zunehmen. In einem solchen transienten Zustand kann der Verdichter 8 in der Regel, insbesondere aufgrund der unzureichenden Abgasströmung, keine ausreichende bzw. keine ausreichend zügige Verdichtung der Frischluft für die benötigte Leistung der Brennkraftmaschine 3 zur Verfügung stellen, so dass durch die zusätzliche Verdichtung der Frischluft durch die Fördereinrichtung 18 ein verbessertes transientes Verhalten des Brennkraftmaschinensystems erreicht wird. Dadurch, dass die Fördereinrichtung 18 als elektrisch angetriebene Maschine 18' ausgestaltet ist, kann die Förderung der Frischluft mittels der Fördereinrichtung 18 bzw. das Verdichten der Frischluft mit Hilfe der Fördereinrichtung 18 unabhängig vom Betriebszustand der Brennkraftmaschine 3 erfolgen.

In Fig. 8 ist ein Abgasrückführmodus 28 des Brennkraftmaschinensystems 1 dargestellt. Im Abgasrückführmodus 28 wird das zweite Ventil 23" der Ventileinrichtung 22 gesperrt bzw. geschlossen, während das erste Ventil 23' und das dritte Ventil 23'" der Ventileinrichtung 22 freigegeben bzw. geöffnet werden. Hierdurch kann keine Frischluft durch den Abgasrückführkanal 13 zum Zusatzkanal 16 gelangen. Die Frischluft strömt also außerhalb des Zusatzkanals 16 durch die Frischluftanlage 4 und gelangt somit zur Brennkraftmaschine 3. Abgas kann im Abgasrückführmodus 28 über den Abgasrückführkanal 13 zum Zusatzkanal 16 gelangen und somit über die Einlassstelle 17 der Frischluft beigemischt und somit der Brennkraftmaschine 3 rückgeführt werden. Im Abgasrückführmodus 28 wird der Zusatzkanal 16 also zur Abgasrückführung eingesetzt. Dabei kann die Fördereinrichtung 18 zur Erhöhung des Massenstroms des Abgases durch den Zusatzkanal 16 und/oder zur Erhöhung der Druckdifferenz zwischen der Abgaszweigstelle 14 und der Einlassstelle 17 eingesetzt werden. Die Strömungswege vom Abgas und Frischluft sind dabei mittels der Linie 29 angedeutet.

In einem nicht gezeigten Normalmodus können das erste Ventil 23' und das zweite Ventil 23" der Ventileinrichtung 22 geschlossen und das dritte Ventil 23'" geöffnet werden, so dass der Zusatzkanal 16 weder vom Abgas noch von Frischluft durchströmt wird. Bei einem weiteren Beispiel könnte im Zusatzkanal ein solches Ventil 23 vorgesehen werden, wobei dieses Ventil 23 geschlossen werden kann, während das erste Ventil 23', das zweite Ventil 23" und das dritte Ventil 23"' geöffnet werden können, um eine Abgasrückführung ausschließlich über den Abgasrückführkanal 13 zu ermöglichen.

Bei allen Ausführungsbeispielen ist es selbstverständlich möglich, einen Betriebszustand zwischen dem Normalmodus, dem Frischluftmodus 27 und dem Abgasrückführmodus 28 einzustellen. Diese Modi 27, 28 sind dabei analog auch auf die in den Fig. 2 bis 6 gezeigten Ausführungsbeispielen des Brennkraftmaschinensystems 1 übertragbar.

## Patentansprüche

1. Brennkraftmaschinensystem (1), insbesondere für ein Kraftfahrzeug (2), mit
- einer Brennkraftmaschine (3),
- einer Frischluftanlage (4) zum Versorgen der Brennkraftmaschine (3) mit Frischluft,
- einer Abgasanlage (5) zum Abführen von in der Brennkraftmaschine (3) entstehendem Abgas,
- einem Abgasrückführkanal (13) zum fluidischen Verbinden der Abgasanlage (5) mit der Frischluftanlage (4), der sich von einer Abgaszweigstelle (14) der Abgasanlage (5) bis zu einer Frischluftzweigstelle (15) der Frischluftanlage (4) erstreckt,
- einem Zusatzkanal (16), der vom Abgasrückführkanal (13) abzweigt, und an einer stromab der Frischluftzweigstelle (15) angeordneten Einlassstelle (17) der Frischluftanlage (4) in die Frischluftanlage (4) mündet,
- einer Fördereinrichtung (18) zum Fördern von durch den Zusatzkanal (16) strömendem Fluid, die im Zusatzkanal (16) angeordnet ist,
- einer Ventileinrichtung (22) zum wahlweise fluidischen Verbinden des Zusatzkanals (13) mit der Abgasanlage (5) und/oder der Frischluftanlage (4).

2. System nach Anspruch 1,
**dadurch gekennzeichnet,**
**dass** die Fördereinrichtung (18) als eine elektrisch angetriebene Maschine (18') ausgestaltet ist.

3. System nach Anspruch 1 oder 2,
**dadurch gekennzeichnet,**
**dass** das System (1) einen Abgasturbolader (6) mit einer in der Abgasanlage (5) angeordneten Turbine (7) und einem in der Frischluftanlage (4) angeordneten Verdichter (8) aufweist.

4. System nach Anspruch 3,
**gekennzeichnet durch**
eine Abgasbehandlungsanlage (10), die eine stromauf der Turbine (7) in der Abgasanlage (5) angeordnete Abgasnachbehandlungseinrichtung (11) aufweist.

5. System nach Anspruch 3 oder 4,
**dadurch gekennzeichnet,**
**dass** die Abgaszweigstelle (14) stromauf der Turbine (7) angeordnet ist.

6. System nach Anspruch 3 oder 4,
**dadurch gekennzeichnet,**
**dass** die Abgaszweigstelle (14) stromab der Turbine (7) angeordnet ist.

7. System nach einem der Ansprüche 1 bis 6,
**gekennzeichnet durch**
einen Frischluftkühler (12) zum Kühlen von **durch** die Frischluftanlage (4) strömendem Fluid, der stromab der Einlassstelle (17) in der Frischluftanlage (4) angeordnet ist.

8. System nach einem der Ansprüche 1 bis 7,
**gekennzeichnet durch**
einen Zusatzkühler (21) zum Kühlen von **durch** den Zusatzkanal (16) strömendem Fluid, der im Zusatzkanal (16) angeordnet ist.

9. System nach einem er Ansprüche 1 bis 8,
**gekennzeichnet durch**
eine Steuereinrichtung (26) zum Steuern der Ventileinrichtung (22) und der Fördereinrichtung (18), die derart ausgestaltet ist, dass sie in einem Frischluftmodus (27):
- mittels der Ventileinrichtung (22) eine über den Abgasrückführkanal (13) verlaufende fluidische Abgasverbindung des Zusatzkanals (16) mit der Abgasanlage (5) sperrt und eine über den Zusatzkanal (16) verlaufende fluidische Frischluftverbindung zwischen der Frischluftanlage (4) und der Einlassstelle (17) freigibt,
- die Fördereinrichtung (18) zum Fördern von Frischluft **durch** den Zusatzkanal (16) betreibt.

10. System nach Anspruch 9,
**dadurch gekennzeichnet,**
**dass** die Steuereinrichtung (26) derart ausgebildet ist, dass sie das System (1) im Frischluftmodus (27) betreibt, wenn die Brennkraftmaschine (3) in einem transienten Zustand ist, während dem eine Drehzahl und/oder eine Last der Brennkraftmaschine (3) zunimmt/zunehmen.

11. System nach Anspruch 9 oder 10,
**dadurch gekennzeichnet,**
**dass** die Ventileinrichtung (22) ein stromab der Frischluftzweigstelle (15) und stromauf der Einlassstelle (17) in der Frischluftanlage (4) angeordnetes Ventil (23) aufweist, wobei die Steuereinrichtung (26) das Ventil (23) im Frischluftmodus (27) sperrt.

12. System nach einem der Ansprüche 1 bis 11,
**gekennzeichnet durch**
eine Steuereinrichtung (26) zum Steuern der Ventileinrichtung (22) und der Fördereinrichtung (18), die derart ausgestaltet ist, dass sie in einem Abgasrückführmodus (28) mittels der Ventileinrichtung (22) eine über den Abgasrückführkanal (13) verlaufende fluidische Frischluftverbindung des Zusatzkanals (16) mit der Frischluftanlage (4) sperrt und eine über den Zusatzkanal (16) verlaufende fluidische Abgasverbindung zwischen der Abgasanlage (5) und der Einlassstelle (17) freigibt.

13. System nach Anspruch 12,
**dadurch gekennzeichnet,**
**dass** die Steuereinrichtung (26) derart ausgestaltet ist, dass sie im Abgasrückführmodus (28) die Fördereinrichtung (18) zum Fördern von Abgas durch den Zusatzkanal (16) betreibt.
